# EUROPEAN PATENT APPLICATION

(11) **EP 4 656 855 A1**
(43) Date of publication of application: **03.12.2025**
(21) Application number: 25178671.1
(22) Date of filing: 24.05.2025
(51) Int. Cl.: F02B 29/04, F02B 67/10, F02B 75/22

(54) **ENGINE**

(30) Priority: 27.05.2024 JP 2024085896; 10.02.2025 JP 2025020257
(71) Applicant: Yanmar Holdings Co., Ltd., Osaka-shi, Osaka (JP)
(72) Inventor: NODA, Takehiro, Osaka (JP); OTOMO, Shogo, Osaka (JP)
(74) Representative: Sekiguchi, Kazuya

(57) **Abstract**

[Problem] To suppress an increase in the size of an engine.

[Solution] An engine 100 includes a turbocharger 1 and a cooling portion 2. The turbocharger 1 pressurizes and compresses intake air. The cooling portion 2 cools the intake air of the turbocharger 1. On an upper side (+Z side) of the engine 100, at least a portion of the cooling portion 2 is placed on one side (+X side) in an output shaft direction with respect to the turbocharger 1.

## Description

### TECHNICAL FIELD

The present invention relates to an engine.

### BACKGROUND ART

Conventionally, an engine in which an intercooler is supported via a bracket is known. For example, in an internal combustion engine (engine) for an automobile of Patent Document 1, an intercooler is located at a position higher than a head cover fixed to an upper surface of a cylinder head and is connected to one end portion of the cylinder head via a front bracket.

In a marine engine or a large engine for land power generation, a turbocharger may be placed in an upper portion of an engine body. For example, in a diesel engine of Patent Document 2, an intercooler is attached to an upper side of a rear end of a cylinder block. The turbocharger is attached to an upper side of the intercooler. The intercooler and the turbocharger protrude from a top portion of the cylinder block.

### PRIOR ART DOCUMENT

### PATENT DOCUMENT

Patent Document 1: Japanese Unexamined Patent Publication No. 2020-105972
Patent Document 2: Japanese Patent No. 6937900

### SUMMARY OF INVENTION

### TECHNICAL PROBLEM

However, the installation space of the engine is likely to be restricted. In particular, in an engine mounted on a ship or the like, the overall height of the engine is significantly restricted, and the suppression of the overall height of the engine is required. That is, it is desired to suppress an increase in the size of the engine. In this regard, in Patent Document 1, the intercooler is fixed at a position higher than the head cover. In Patent Document 2, the turbocharger is further attached to the upper side of the intercooler attached to the rear upper side of the cylinder block. Therefore, in Patent Document 1 and Patent Document 2, the overall height is likely to be high, and the engine is likely to be large.

The present invention has been made in consideration of the above situation, and an object of the present invention is to suppress an increase in the size of an engine.

### SOLUTION TO PROBLEM

In order to achieve the above-described object, an engine according to an aspect of the present invention includes a turbocharger and a cooling portion. The turbocharger pressurizes and compresses intake air. The cooling portion cools the intake air of the turbocharger. On an upper side of the engine, at least a portion of the cooling portion is placed on one side in an output shaft direction with respect to the turbocharger.

Additional features and advantages of the present invention will become more apparent from the following embodiment.

### ADVANTAGEOUS EFFECTS OF INVENTION

According to the present invention, an increase in the size of the engine can be suppressed.

### BRIEF DESCRIPTION OF DRAWINGS

FIG. 1 is a left side view illustrating a configuration example of an engine according to an embodiment.
FIG. 2 is a top view illustrating a configuration example of the engine.
FIG. 3 is a front view illustrating a configuration example of the engine.
FIG. 4 is a rear view illustrating a configuration example of the engine.
FIG. 5 is a left side view illustrating another configuration example of the engine.
FIG. 6 is a top view illustrating another configuration example of the engine.
FIG. 7 is a rear view illustrating another configuration example of the engine.
FIG. 8 is a schematic view illustrating an example of a vehicle equipped with the engine.
FIG. 9 is a cross-sectional view illustrating a configuration example of a support portion.
FIG. 10 is a perspective view illustrating a configuration example of the support portion.
FIG. 11 is a cross-sectional view illustrating an example of an attachment structure of a coolant pipe.
FIG. 12 is a schematic view illustrating a configuration example of a coolant tank.

### DESCRIPTION OF EMBODIMENTS

The following is a detailed description of an exemplary embodiment of the present invention with reference to the drawings. In the drawings, an XYZ coordinate system is shown as a 3D orthogonal coordinate system, as appropriate. In the following description, an X direction is defined as a front-rear direction, a Y direction is defined as a left-right direction, and a Z direction is defined as an up-down direction. A +X side is defined as a front side, and a -X side is defined as a rear side. A +Y side is defined as a left side, and a -Y side is defined as a right side. A +Z side is defined as an upper side, and a -Z side is defined as a lower side.

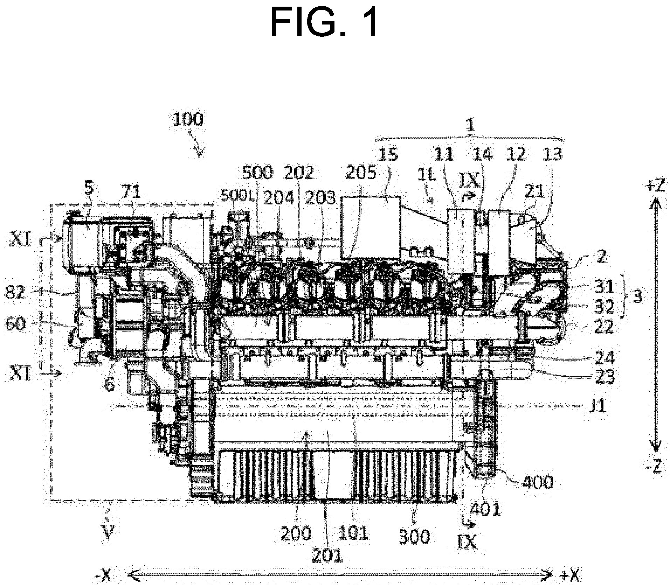

Specifically, a direction in which a center line J1 of a crankshaft 101 (output shaft) illustrated in FIG. 1 and the like extends is defined as the front-rear direction. A side on which a cylinder block 201 is placed with respect to a flywheel 401 housed in a flywheel housing 400 is referred to as the front side (i.e., the +X side). The front-rear direction may be referred to as an "engine output shaft direction". In this specification, the front side is an example of "one side in the engine output shaft direction" of the present invention, and the rear side (that is, the -X side) is an example of "another side in the engine output shaft direction" of the present invention.

A side on which an oil pan 300 is placed with respect to the cylinder block 201 is defined as the lower side (that is, the -Z side), and the up-down direction orthogonal to the front-rear direction is defined.

A direction orthogonal to the front-rear direction and the up-down direction is defined as the left-right direction, and the left side when viewed from the front side toward the rear side is defined as the left side (that is, the +Y side) and the right side when viewed from the front side toward the rear side is defined as the right side (that is, the -Y side).

These directions are names used merely for the description and are not intended to limit actual positional relationships and directions.

### <1. Engine 100>

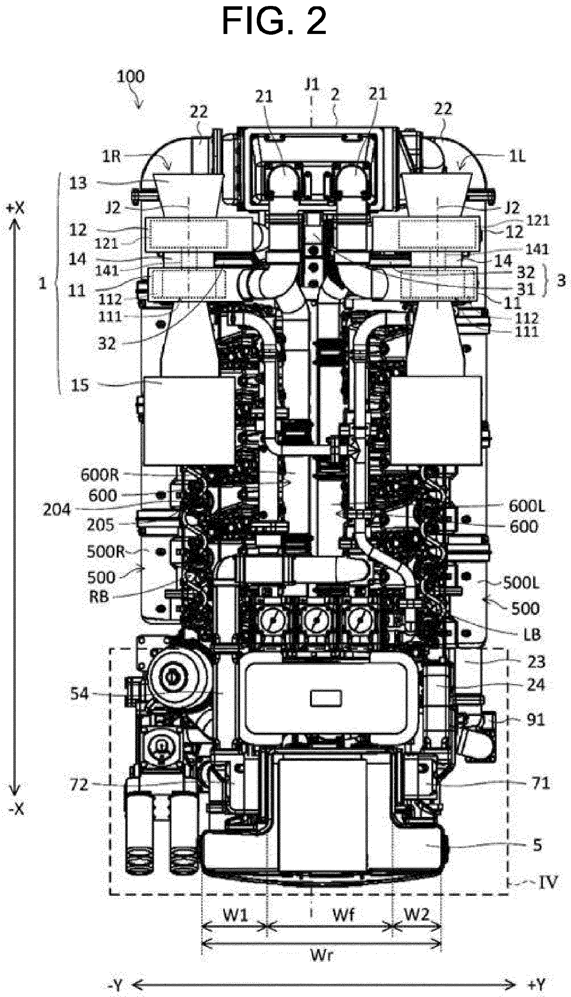

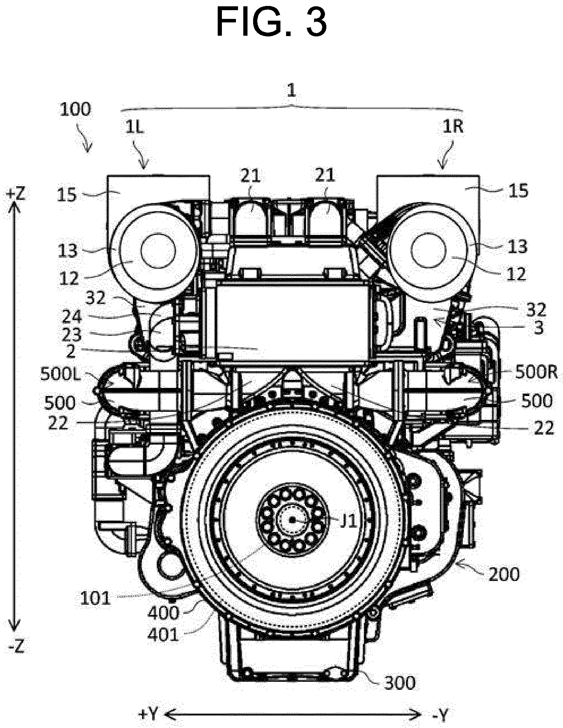

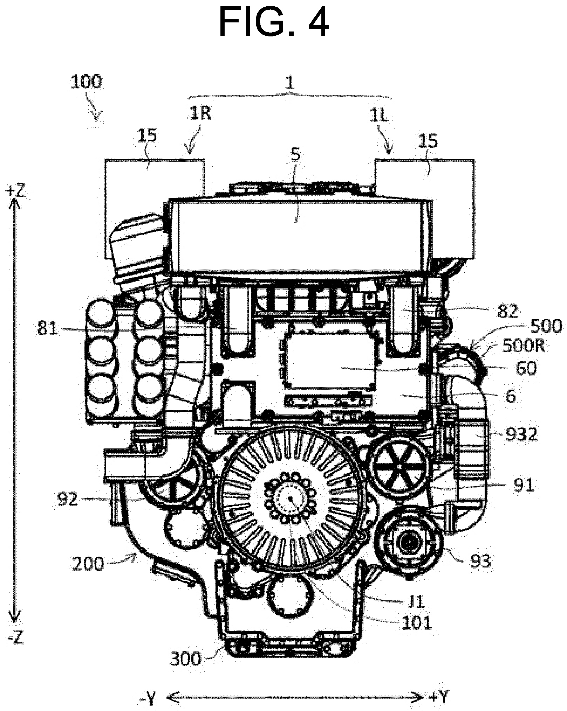

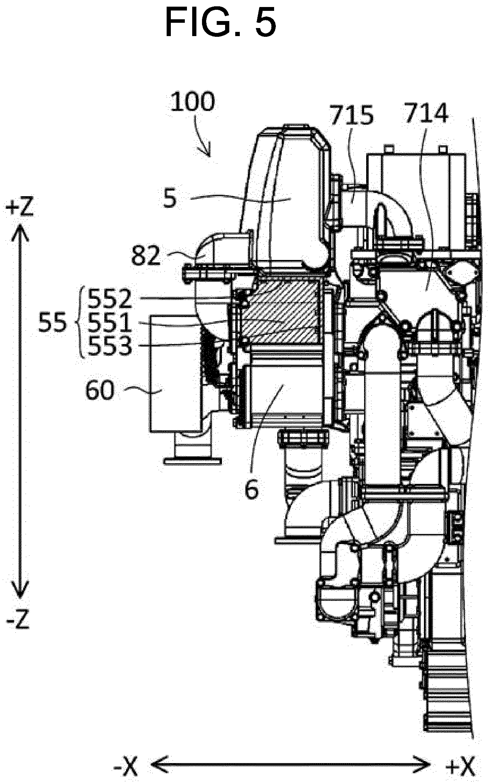

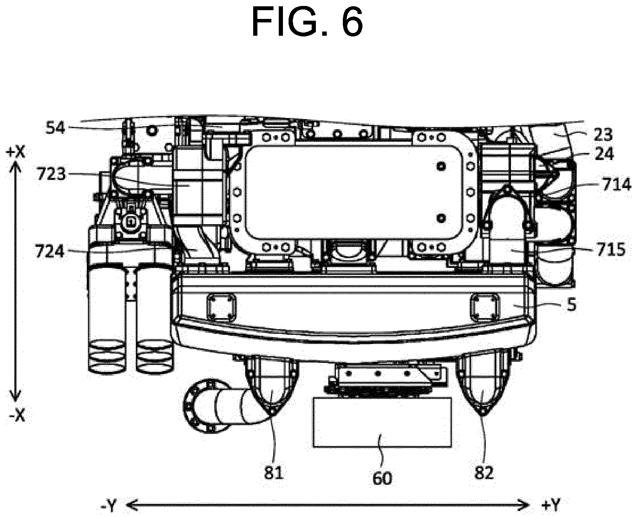

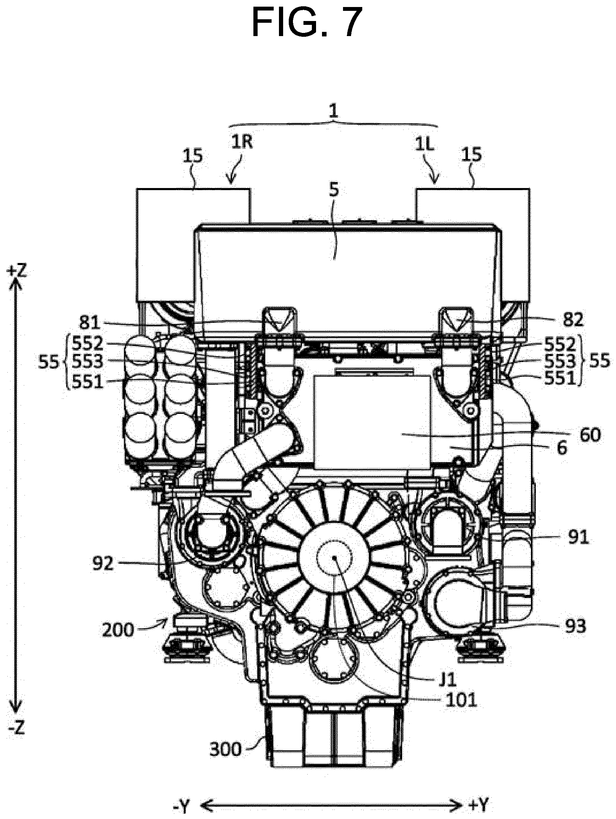

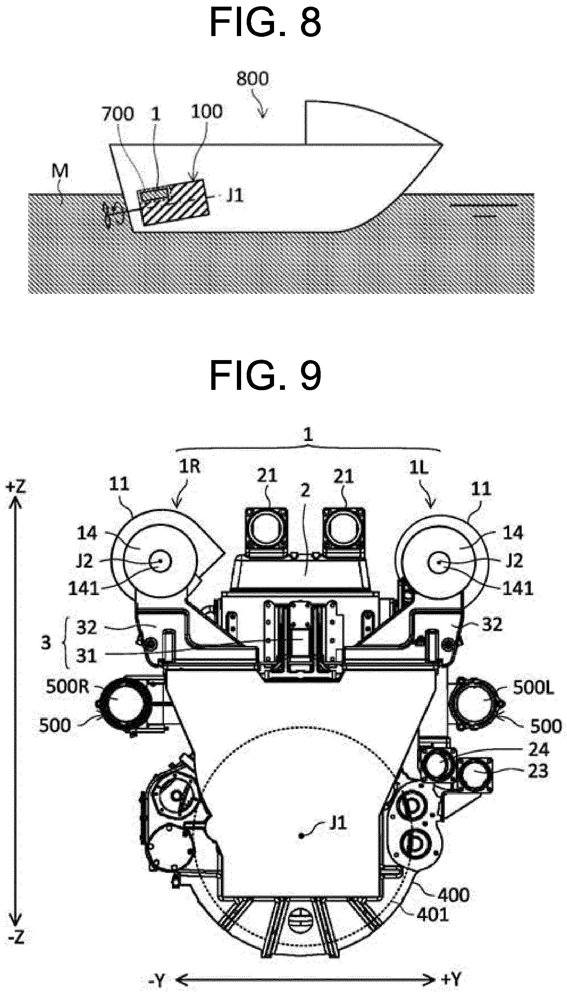

First, an outline of the engine 100 will be described with reference to FIGS. 1 to 8. FIG. 1 is a left side view illustrating a configuration example of the engine 100 according to an embodiment. FIG. 2 is a top view illustrating a configuration example of the engine 100. FIG. 3 is a front view illustrating a configuration example of the engine 100. FIG. 4 is a rear view illustrating a configuration example of the engine 100. FIG. 5 is a left side view illustrating another configuration example of the engine 100. FIG. 6 is a top view illustrating another configuration example of the engine 100. FIG. 7 is a rear view illustrating another configuration example of the engine 100. FIG. 8 is a schematic view illustrating an example of a vehicle 800 equipped with the engine 100. Note that FIG. 5 corresponds to a portion surrounded by a broken line V in FIG. 1. FIG. 6 corresponds to a portion surrounded by a broken line IV in FIG. 2.

The engine 100 is a diesel engine for propulsion mounted on a vehicle 800 such as a marine vessel on water such as a ship in the present embodiment. However, the present invention is not limited to this example, and the engine 100 may be mounted on, for example, a power generation device, a device other than a vessel (for example, a vehicle 800 on land or in the air), or the like.

### <1-1. Combustion Engine of Engine 100>

The engine 100 includes an engine body 200 and an oil pan 300. The oil pan 300 is provided below a cylinder block 201 and stores lubricant oil. The lubricant oil stored in the oil pan 300 is supplied to each portion of the engine 100 that requires lubrication.

The engine body 200 includes the cylinder block 201, a head block 202, and a head cover 203.

A plurality of pistons (not shown) and a crankshaft 101 are arranged inside the cylinder block 201. The crankshaft 101 is an engine output shaft (may be referred to as an output shaft) of the engine 100 and extends in the front-rear direction. The crankshaft 101 is connected to each piston and converts the reciprocating motion of the piston into rotational motion. The flywheel 401 (see FIG. 1) housed in the flywheel housing 400 is attached to a rear end of the crankshaft 101. The flywheel 401 rotates integrally with the crankshaft 101 and is used to extract power of the engine 100.

The cylinder block 201 has a plurality of cylinders 204 arranged in the front-rear direction on each of the left and right sides. Each of the plurality of pistons is disposed in each cylinder 204. Hereinafter, a row of the cylinders 204 arranged in the front-rear direction (engine output shaft direction) will be referred to as a cylinder row 205. Each of the cylinder rows 205 is placed on the outer side in the left-right direction than the crankshaft 101 of the engine 100.

The engine 100 of the present embodiment is a V-type 12-cylinder engine, and has a pair of left and right (that is, two) cylinder rows 205. Each cylinder row 205 is composed of a plurality of (six) cylinders 204 arranged in the front-rear direction. However, this example does not exclude a configuration in which the engine 100 is not a V-type 12-cylinder engine. For example, the number of cylinder rows 205 of the engine 100 may be a positive integer other than two. The number of cylinders 204 in each cylinder row 205 may be a positive integer other than six.

The head block 202 is placed on the upper side of each side cylinder 204. That is, the engine body 200 includes six head blocks 202 arranged in the front-rear direction on each of the left and right sides. Each head block 202 constitutes a combustion chamber together with the cylinder 204 and the piston. The head block 202 has an intake port (not shown) for supplying gas into the combustion chamber and an exhaust port (not shown) for exhausting gas from the combustion chamber.

The head cover 203 is placed on the upper side of each head block 202. That is, the engine body 200 has six head covers 203 arranged in the front-rear direction on each of the left and right sides. Each of the head covers 203 covers an intake valve and an exhaust valve (not shown) arranged in the head block 202. An injector (not shown) is mounted on each of the head covers 203. One end portion (lower end portion) of the injector on which an injection port for injecting fuel is provided faces the combustion chamber. Each injector injects fuel supplied from a fuel pump (not shown) that discharges fuel at a high pressure into the combustion chamber at an appropriate timing. The piston is reciprocated by force generated by combustion of fuel injected into the combustion chamber.

The cylinder row 205, the head block 202, and the head cover 203 that are arranged on the left side of the engine 100 constitute a left bank LB. The cylinder row 205, the head block 202, and the head cover 203 that are arranged on the right side of the engine 100 constitute a right bank RB. That is, the engine 100 is a V-type engine including the left bank LB and the right bank RB arranged in the left-right direction.

### <1-2. Air Supply and Exhaust System of Engine 100>

The engine 100 includes an air supply manifold 500, an exhaust manifold 600, a turbocharger 1, an intercooler 2, an air supply pipe 21, and an air feed pipe 22.

### <1-2-1. Air Supply Manifold 500>

The air supply manifold 500 is an intake passage extending in the front-rear direction, and distributes supply air, which is air or a gas mixture supplied from the turbocharger 1, to the respective cylinders 204 (combustion chambers). Specifically, the air supply manifolds 500 are provided one by one on the left side surface and the right side surface of the engine body 200 so as to correspond to the cylinder rows 205 provided on the left and right sides. The air supply manifolds 500 all extend in the front-rear direction. Hereinafter, the air supply manifold 500 provided on the left side of the engine 100 correspondingly to the left cylinder row 205L may be referred to as a left air supply manifold 500L. The air supply manifold 500 provided on the right side of the engine 100 correspondingly to the right cylinder row 205R may be referred to as a right air supply manifold 500R. In the engine 100, the left air supply manifold 500L and the right air supply manifold 500R are placed on the outer side in the left-right direction than the V bank composed of the left bank LB and the right bank RB.

### <1-2-2. Exhaust Manifold 600>

The exhaust manifold 600 is an exhaust passage extending in the front-rear direction and collects exhaust from the respective cylinders 204 (combustion chambers). Two exhaust manifolds 600 arranged in the left-right direction are provided between the left bank LB and the right bank RB (in other words, inside a V bank composed of the left bank LB and the right bank RB). Specifically, the exhaust manifold 600 on the left side is provided correspondingly to the cylinder row 205L on the left side. The exhaust manifold 600 on the right side is provided correspondingly to the cylinder row 205R on the right side. Hereinafter, the exhaust manifold 600 arranged on the left side in the V bank correspondingly to the cylinder row 205L on the left side may be referred to as a left exhaust manifold 600L. The exhaust manifold 600 arranged on the right side in the V bank correspondingly to the cylinder row 205R on the right side may be referred to as a right exhaust manifold 600R.

### <1-2-3. Turbocharger 1>

The turbocharger 1 is disposed at a front upper portion of the engine 100. The turbocharger 1 pressurizes and compresses intake air (for example, air or a gas mixture) supplied from the outside of the engine 100 and supplies the intake air to the air supply manifold 500 via the intercooler 2. The turbocharger 1 is a turbocharger that uses exhaust gas supplied from the exhaust manifold 600 as a drive source.

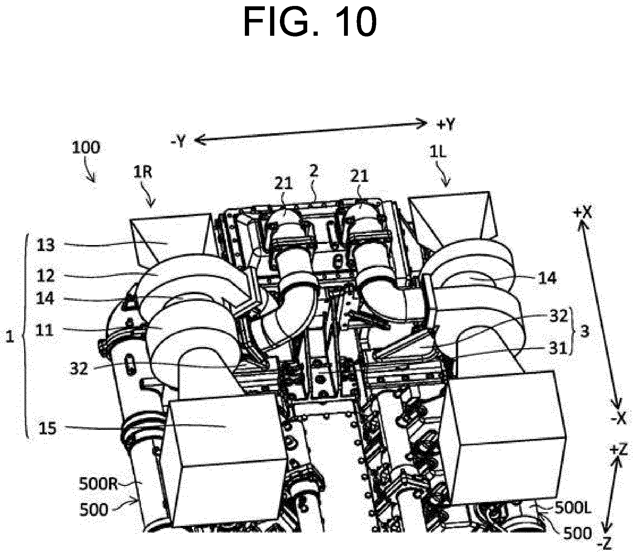

The turbocharger 1 includes a compressor 11, a turbine portion 12, an exhaust pipe 13, and a bearing portion 14. The bearing portion 14 of the turbocharger 1 is supported by a below-described second support member 32 provided in a below-described flywheel housing 400 (see FIGS. 9 and 10 described below). The engine 100 further includes a filter portion 15 attached to the intake side of the turbocharger 1. The filter portion 15 purifies intake air from the outside and sends the intake air to the compressor 11. The exhaust pipe 13, the turbine portion 12, the bearing portion 14, the compressor 11, and the filter portion 15 are connected in series in this order from the front side toward the rear side.

The compressor 11 is an air feeding portion, pressurizes and compresses the intake air via the filter portion 15, and sends the compressed intake air to the intercooler 2 via the air supply pipe 21. In the present embodiment, the compressor 11 is a scroll compressor. The compressor 11 (the central portion of the compressor 11 when viewed in the up-down direction) is placed to be shifted outward in the left-right direction from the center line J1 of the crankshaft 101.

The compressor 11 and the turbine portion 12 are preferably arranged along the same direction as the center line J1 of the crankshaft 101 (that is, in the engine output shaft direction). In the engine 100 in which the cylinder rows 205 are arranged on the outer side than the crankshaft 101 in the left-right direction as in the present embodiment, the vibration of the engine 100 in the left-right direction generated due to the rotation of the crankshaft 101 easily acts on the turbocharger 1. Therefore, for example, when the compressor 11 and the turbine portion 12 are arranged along the left-right direction and the bearing portion 14 between the compressor 11 and the turbine portion 12 is supported by the second support member 32, the turbocharger 1 vibrates like a balancing toy. On the other hand, in the present embodiment, since the turbine portion 12 and the compressor 11 are arranged along the same direction as the center line J1 of the crankshaft 101, the vibration caused by the rotation of the crankshaft 101 is less likely to act on the turbocharger 1. Therefore, the engine 100 can suppress the vibration of the turbocharger 1, and can suppress, for example, an increase in the vibration width of the turbocharger 1. However, this example does not exclude a configuration in which the compressor 11 does not send the intake air of the turbocharger 1 to the inner side in the left-right direction.

The turbine portion 12 is connected to an exhaust port of the exhaust manifold 600, and exhaust gas of the engine 100 passes through the turbine portion 12. That is, the turbine portion 12 converts (kinetic) energy of the exhaust gas of the engine 100 into rotational energy (torque). The exhaust gas is discharged from the combustion chamber composed of the cylinder 204 and the like and flows into the turbine portion 12 via the exhaust manifold 600. The exhaust gas after the energy conversion is discharged to the outside via the exhaust pipe 13.

The bearing portion 14 is arranged between the compressor 11 and the turbine portion 12, and transmits the above-described rotational energy from the turbine portion 12 to the compressor 11. The compressor 11 pressurizes and compresses the intake air using the rotational energy.

For example, the compressor 11 has a rotor 111 and a plurality of bladeshaped vanes 112. The plurality of vanes 112 are provided on a radially outer surface of the rotor 111 with respect to a center line J2 of the rotor 111, and are arranged in the circumferential direction around the center line J2. The turbine portion 12 includes a turbine 121. The bearing portion 14 includes a shaft 141 that extends along the center line J2 and a bearing (not shown) that rotatably holds the shaft 141. The shaft 141 is a rotation shaft extending along the center line J2. The above-described bearing rotatably holds the shaft 141. The turbine 121 is connected to a front end portion of the shaft 141. The rotor 111 is connected to a rear end portion of the shaft 141. The center line J2 passes through the rotation center of the turbine 121 of the turbine portion 12, the rotation center of the shaft 141 of the bearing portion 14, and the rotation center of the rotor 111 of the compressor 11. The turbine 121, the shaft 141, and the rotor 111 described above are all rotatable about the center line J2.

The turbine 121 of the turbine portion 12 rotates in accordance with the flow of exhaust gas of the engine 100 flowing in from the exhaust manifold 600. The rotational energy (torque) of the turbine 121 is transmitted to the rotor 111 of the compressor 11 via the shaft 141 of the bearing portion 14. Thus, the vanes 112 of the rotor 111 rotate in the circumferential direction around the center line J2 to pressurize and compress the intake air flowing into the compressor 11 from the filter portion 15. The pressurized and compressed intake air is sent to the air supply manifold 500.

At least a portion of the turbocharger 1 may be covered by a cover member 700 (see FIG. 8). That is, the engine 100 may further include the cover member 700. The cover member 700 covers, for example, the turbine portion 12. By covering the turbine portion 12 with the cover member 700, noise and heat generated in the turbine portion 12 are less likely to be transmitted to the outside of the cover member 700. Therefore, the transmission of noise and heat from the turbocharger 1 to the outside can be suppressed. However, this example does not exclude a configuration in which the engine 100 does not include the cover member 700.

In the present embodiment, the turbocharger 1 has a left turbocharger 1L and a right turbocharger 1R. The configuration of the left turbocharger 1L is the same as the configuration of the right turbocharger 1R except that the left turbocharger 1L and the right turbocharger 1L are bilaterally symmetric. The left turbocharger 1L is placed in an upper left portion of the engine body 200 in a rear portion of the engine 100. The left turbocharger 1L supplies (that is, takes in) air or the like to the left air supply manifold 500L via the intercooler 2, and discharges, to the outside, exhaust gas flowing in from the left exhaust manifold 600L. The right turbocharger 1R is placed in an upper right portion of the engine body 200 in a rear portion of the engine 100. The right turbocharger 1R supplies (that is, takes in) air or the like to the right air supply manifold 500R via the intercooler 2, and discharges, to the outside, exhaust gas flowing in from the right exhaust manifold 600R.

### <1-2-4. Intercooler 2>

The intercooler 2 is a cooling portion that cools intake air of the turbocharger 1. The intercooler 2 is connected to the compressor 11 of the turbocharger 1 via an air supply pipe 21 and is connected to the air supply manifold 500 via an air feed pipe 22. The intercooler 2 is supplied with a coolant F from a first coolant pump 91 for low-temperature water via a liquid supply pipe 23 as described below, and cools the pressurized and compressed intake air. In the present embodiment, the coolant F is fresh water. However, the coolant F may be a liquid other than fresh water, such as an antifreeze solution. The antifreeze solution is, for example, a liquid obtained by mixing pure water and ethylene glycol at a predetermined ratio.

The temperature of the intake air supplied from the turbocharger 1 is increased by compression heat generated by pressurization and compression in the turbocharger 1. The intercooler 2 cools the pressurized and compressed intake air by exchanging heat between the cooling water and the pressurized and compressed intake air. That is, providing the intercooler 2 allows the temperature of the intake air that is to be supplied to the air supply manifold 500 to be adjusted to a desired temperature.

Preferably, on the upper side of the engine 100, at least a portion of the intercooler 2 is placed on the front side of the turbocharger 1. More preferably, on the upper side of the engine 100, the entire intercooler 2 is placed on the front side of the turbocharger 1. The front side is one side in the engine output shaft direction parallel to the crank shaft of the engine 100. Thus, in the engine 100, the intercooler 2 can be placed away from the turbocharger 1 without separating the intercooler 2 from the turbocharger 1 in the front-rear direction (engine output shaft direction). Thus, in the engine 100, one of the intercooler 2 and the turbocharger 1 does not need to be placed above the other. Therefore, in the engine 100, it is possible to suppress an increase in the size of the engine 100 (particularly, an increase in the width in the up-down direction). The above-described effect is particularly effective when the engine 100 is mounted on, for example, a ship. For example, in the engine 100, the reduction of the width in the up-down direction is prioritized over the reduction of the width in the engine output shaft direction (front-rear direction). Therefore, the engine 100 can be compactly placed in a ship or the like. However, this example does not exclude a configuration in which the entire intercooler 2 is not placed on the front side of the turbocharger 1 above the engine 100.

In the engine 100, by separating the turbocharger 1 from the intercooler 2, it is possible to suppress or prevent a decrease in the cooling performance of the intercooler 2 due to the heat radiation of the turbocharger 1.

Preferably, on the upper side of the engine 100, at least a portion of the turbocharger 1 that is placed on the outer side than (the center line J2 of) the bearing portion 141 of the bearing portion 14 in the left-right direction is placed on the outer side than the intercooler 2 in the left-right direction. More preferably, the entire turbocharger 1 is placed on the outer side than the intercooler 2 in the left-right direction. As described above, the left-right direction is a direction perpendicular to both the front-rear direction (the engine output shaft direction) and the up-down direction.

Thus, the turbocharger 1 can be placed on a lower side of the engine 100 (for example, as compared to a configuration in which at least an outside part of the turbocharger 1 in the left-right direction is not placed on an outer side than the intercooler 2 in the left-right direction). Therefore, in the engine 100, it is possible to suppress an increase in the width of the engine 100 in the up-down direction and suppress an increase in the size of the engine 100 (particularly in the up-down direction). However, this example does not exclude a configuration in which the entire turbocharger 1 in the left-right direction is not placed on the outer side than the intercooler 2 in the left-right direction above the engine 100.

### <1-2-5. Support Portion 3>

Preferably, the engine 100 further includes a support portion 3. FIG. 9 is a cross-sectional view illustrating a configuration example of the support portion 3. FIG. 10 is a perspective view illustrating a configuration example of the support portion 3. FIG. 9 illustrates a cross section of the engine 100 taken along a two dot chain line IX-IX in FIG. 1 when viewed from the rear side.

The support portion 3 supports the turbocharger 1 and the intercooler 2 at a front upper portion of the engine 100. The support portion 3 of the engine 100 includes a first support member 31 and a second support member 32. The first support member 31 and the second support member 32 are attached to an upper portion of the flywheel housing 400. In other words, the flywheel housing 400 supports the intercooler 2 via the first support member 31 and supports the turbocharger 1 via the second support member 32.

The first support member 31 supports the intercooler 2. For example, a front portion of the first support member 31 is attached to a rear end surface of the intercooler 2, and a lower portion of the first support member 31 is attached to the flywheel housing 400. The intercooler 2 is supported by the first support member 31 to be spaced apart from the flywheel housing 400 in at least one of the front side direction and the upper side direction. Thus, the transmission of heat and vibration from the engine body 200 (particularly, the combustion chamber composed of the cylinder 204 and the like) to the intercooler 2 can be suppressed.

The second support member 32 is provided independently of the first support member 31 and supports the turbocharger 1. For example, the upper portion of the second support member 32 is attached to the bearing portion 14 of the turbocharger 1, and the lower portion of the second support member 32 is attached to the flywheel housing 400. The turbocharger 1 is supported by the second support member 32 to be spaced apart from the flywheel housing 400 in the upper side direction. Thus, the transmission of heat and vibration from the engine body 200 (particularly, the combustion chamber composed of the cylinder 204 and the like) to the turbocharger 1 can be suppressed.

In the present embodiment, the second support member 32 is provided independently of the first support member 31. For example, the second support members 32 are provided independently of the first support member 31 on both sides of the first support member 31 in the left-right direction on the upper portion of the flywheel housing 400. Thus, the transmission of vibration between the turbocharger 1 and the intercooler 2 can be suppressed by independently providing the first support member 31 and the second support member 32. Therefore, in the engine 100, it is possible to suppress the influence of the vibration of the turbocharger 1 on the intercooler 2. However, this example does not exclude a configuration in which at least one second support member 32 is provided integrally with the first support member 31.

However, the example of the present embodiment does not exclude a configuration in which the engine 100 does not have at least one of the first support member 31 and the second support member 32. That is, the support portion 3 or any one of the first support member 31 and the second support member 32 may be omitted.

### <1-3. Cooling System of Engine 100>

Next, an example of a cooling system of the engine 100 will be described. The engine 100 further includes a coolant tank 5, a heat exchanger 6, an electrical equipment portion 60, a first switching portion 71, a second switching portion 72, a first coolant pump 91, a second coolant pump 92, and a water pump 93. The coolant tank 5 is a storage portion of the coolant F. The heat exchanger 6 is a cooling portion that cools the coolant F. The coolant tank 5 and the heat exchanger 6 are arranged in the up-down direction in a rear end portion of the engine 100. The above-described rear end portion is the other side end portion in the engine output shaft direction parallel to the crankshaft 101 of the engine 100.

The coolant tank 5 is placed above the heat exchanger 6, and is preferably placed at an interval from the heat exchanger 6 in the up-down direction (see FIGS. 4, 7, and the like). Thus, thermal interference between the coolant tank 5 and the heat exchanger 6 other than the heat transfer by the coolant F can be suppressed or prevented.

In this case, preferably, as illustrated in FIGS. 5 and 7, the coolant tank 5 is held by a holding portion 55. In the present embodiment, the pair of (i.e., two) holding portions 55 are placed on the outer side in the left-right direction than the coolant pipes 81, 82. That is, the holding portion 55 on the right side is placed on the right side (-Y side) of the coolant pipe 81 on the right side. The holding portion 55 on the left side is placed on the left side (+Y side) of the coolant pipe 82 on the left side.

The shapes of the pair of holding portions 55 are bilaterally symmetrical when viewed from the rear side towards the front side (see FIG. 7). This example does not exclude a configuration in which the shapes of the pair of holding portions 55 are not bilaterally symmetrical. The number of the holding portions 55 is not limited to the above-described example, and may be one or three or more. The at least one holding portion 55 may be provided between the coolant pipes 81 and 82 in the left-right direction.

The holding portion 55 has a first holding portion 551, a second holding portion 552, and a third holding portion 553. The first holding portion 551 is fixed to an outer end portion of the heat exchanger 6 in the left-right direction and extends in the up-down direction. The first holding portion 551 has a plate shape in the present embodiment and extends in the front-rear direction. The second holding portion 552 extends in the left-right direction from an upper end portion of the first holding portion 551. **In** the present embodiment, the second holding portion 552 has a plate shape that extends outward in the left-right direction and extends in the front-rear direction. The coolant tank 5 is placed on the upper surface of the second holding portion 552. The second holding portion 552 is connected to the coolant tank 5. The third holding portion 553 extends in the left-right direction from a front end portion of the first holding portion 551. **In** the present embodiment, the third holding portion 553 has a plate shape that extends outward in the left-right direction, extends in the up-down direction, and is fixed to a plate portion (reference numeral omitted) that extends outward in the left-right direction from a front end portion of the heat exchanger 6. The third holding portion 553 may be omitted.

The fixing means of the first holding portion 551, the connecting means of the second holding portion 552, and the fixing means of the third holding portion 553 are bolting in the present embodiment, but are not limited to this example. At least one of these may be, for example, welding, brazing using silver solder or the like, or a mechanical connecting means such as a fitting structure.

As described above, in FIGS. 5 to 7, the engine 100 includes the holding portion 55. However, this example does not exclude a configuration in which the engine 100 does not include the holding portion 55. That is, the holding portion 55 may be omitted.

In FIGS. 1 to 4, the rear end portion of the coolant tank 5 is placed on the rear side of the rear end portion of the heat exchanger 6. Thus, a desired capacity of the coolant tank 5 can be secured by increasing the width of the coolant tank 5 in the engine output shaft direction (front-rear direction). Thus, it is possible to suppress an increase in the width of the coolant tank 5 in the up-down direction as compared to a configuration in which the width of the coolant tank 5 in the up-down direction is increased to ensure a desired capacity. Therefore, it is possible to secure the volume of the coolant tank 5 while suppressing an increase in the size (particularly, the width in the up-down direction) of the engine 100.

However, the examples of FIGS. 1 to 4 do not exclude a configuration in which the rear end portion of the coolant tank 5 is not placed on the rear side of the rear end portion of the heat exchanger 6. For example, as illustrated in FIGS. 5 to 7, the rear end portion of the coolant tank 5 may be placed on the front side of the rear end portion of the heat exchanger 6. Alternatively, the position of the rear end portion of the coolant tank 5 in the front-rear direction may be the same as the position of the rear end portion of the heat exchanger 6 in the front-rear direction.

In FIGS. 1 to 4, the engine 100 further includes a plurality of coolant pipes 81 and 82 that connect the coolant tank 5 and the heat exchanger 6. The coolant pipes 81 and 82 are preferably placed below the coolant tank 5 and behind the heat exchanger 6. Thus, in the engine 100, the empty space below the coolant tank 5 and behind the heat exchanger 6 can be effectively utilized to compactly arrange at least some of the coolant pipes 81, 82. Therefore, for example, as compared to a configuration in which the above-described coolant pipes 81 and 82 are placed on the outer surface side of the engine 100 (particularly, the outer side in the direction perpendicular to the front-rear direction), an increase in the size of the engine 100 can be suppressed.

However, the above-described example does not exclude a configuration in which at least one of the plurality of coolant pipes 81, 82 is not arranged in the above-described space. For example, as illustrated in FIGS. 5 to 7, at least one of the coolant pipes 81 and 82 may protrude backward from the rear end portion of the coolant tank 5, then extend downward, and be connected to the heat exchanger 6. In this case, at least one of the coolant pipes 81 and 82 may be connected to the rear end portion of the heat exchanger 6 as illustrated in FIGS. 5 to 7, or may be connected to the upper end portion or the end portion in the left-right direction of the heat exchanger 6.

In FIGS. 5 to 7, the plurality of coolant pipes 81 and 82 are connected to the rear end surface of the heat exchanger 6. In this case, the end portions of the coolant pipes 81 and 82 on the heat exchanger 6 side protrude backward from the rear end surface of the heat exchanger 6. On the other hand, the electrical equipment portion 60 is placed in a space between the end portions of the coolant pipes 81 and 82 on the heat exchanger 6 side in the left-right direction. Therefore, the engine 100 can effectively utilize the space to compactly arrange the end portions of the coolant pipes 81 and 82 on the heat exchanger 6 side and the electrical equipment portion 60.

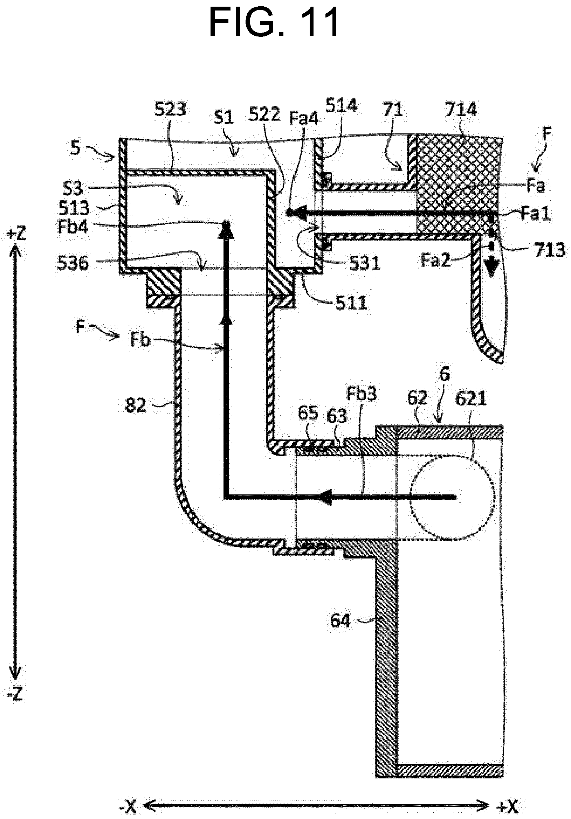

One end portions of the coolant pipes 81 and 82 are connected to the coolant tank 5. The second end portions of the coolant pipes 81 and 82 are connected to the heat exchanger 6. FIG. 11 is a cross-sectional view illustrating an example of an attachment structure of the coolant pipe 82. FIG. 11 is a local cross-sectional view taken along a two dot chain line XI-XI in FIG. 1. The attachment structure of the coolant pipe 81 to the heat exchanger 6 is the same as that of the coolant pipe 82, and thus the description thereof will be omitted.

In the present embodiment, the heat exchanger 6 has ports for the coolant pipes 81 and 82. The port 63 for the coolant pipe 82 (see FIG. 11) is a fitting portion that is fitted to an end portion of the coolant pipe 82 on the heat exchanger 6 side. The port 63 is provided on a rear end portion (for example, the lid portion 64) of the heat exchanger 6, has a cylindrical shape extending from the rear end portion of the heat exchanger 6 in the engine output shaft direction (specifically, toward the rear side), and is connected to a flow passage 621 described below.

The second end portion of the coolant pipe 82 (that is, the end portion on the heat exchanger 6 side) extends in the front-rear direction, that is, extends parallel to the port 63. One of the second end of the coolant pipe 82 and (the rear end portion of) the port 63 is fitted into the other. For example, in FIG. 11, (the rear end portion of) the port 63 is inserted and fitted into the second end of the coolant pipe 82. However, the present invention is not limited to this example, and the second end of the coolant pipe 82 may be inserted and fitted into (the rear end portion of) the port 63. Thus, a coolant Fb3 described below can flow from the second end of the coolant pipe 82 to the flow passage 621 via the port 63. A seal member 65 such as an O-ring is interposed between the second end of the coolant pipe 82 and the port 63 in order to prevent leakage of the coolant F.

That is, the second end of the coolant pipe 82 is connected to the heat exchanger 6 by a fitting structure of one of the second end of the coolant pipe 82 and (the rear end portion of) the port 63 with respect to the other of the second end of the coolant pipe 82 and (the rear end of) the port 63. Thus, even when the fitting position of the second end of the coolant pipe 82 and (the rear end of) the port 63 in the extending direction of the second end of the coolant pipe 82 and (the rear end of) the port 63 is deviated, the second end of the coolant pipe 82 and (the rear end of) the port 63 can be easily connected to allow the coolant F to flow. Furthermore, since both extend in the same direction, the relative position of (the rear end portion of) the port 63 with respect to the second end of the coolant pipe 82 can be changed in the extending direction of both (for example, the front-rear direction). For example, when the lid portion 64 that has been removed at the time of internal maintenance or the like is reattached to the heat exchanger 6, the position of the lid portion 64 in the front-rear direction may be slightly deviated from the position of the lid portion 64 together with the port 63 before the removal. Even in such a case, when the magnitude of the above-described deviation is such that the fitting of the rear end portion of the port 63 to the second end of the coolant pipe 82 is not released, the two can be easily connected to each other by the above-described fitting structure.

However, the above-described example does not exclude a configuration in which the relative position of the port 63 with respect to the second end of the coolant pipe 82 cannot be changed in the extending direction of the port 63 and the second end of the coolant pipe 82. The connecting means of the coolant pipe 82 to (the flow passage 621 of) the heat exchanger 6 is also not limited to the above-described example. For example, the connecting means may be bolting, welding, or the like. The heat exchanger 6 is not limited to the above-described example, and may have, instead of the port 63, a hole portion into which the second end of the coolant pipe 82 is fitted so as to be moveable in the front-rear direction. That is, the hole portion may be a fitting portion that is fitted to the end portion of the coolant pipe 82 on the heat exchanger 6 side.

### <1-3-1. Coolant Tank 5>

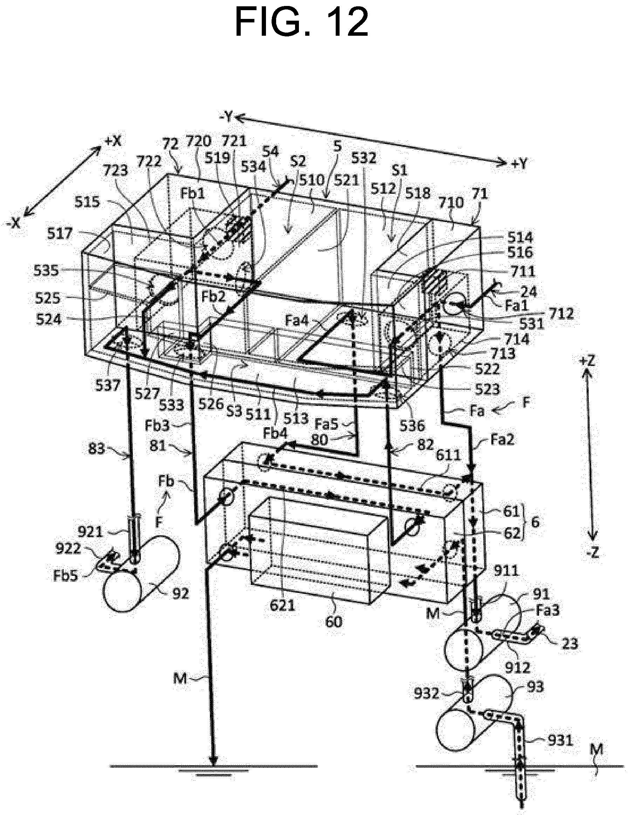

FIG. 12 is a schematic view illustrating a configuration example of the coolant tank 5. The coolant tank 5 can store the coolant F for cooling each portion of the engine 100, and has a role of absorbing a change in the volume of the coolant F due to a temperature rise of the coolant F or the like. The coolant tank 5 has a T-shape when viewed in the up-down direction and extends in the up-down direction.

In the present embodiment, when viewed in the up-down direction, a width Wf in the left-right direction of a front side portion (first portion) of the coolant tank 5 is larger than a width Wr in the left-right direction of a rear side portion (second portion) of the coolant tank 5 (see FIG. 2). Thus, it is possible to secure the desired volume of the coolant tank 5 while suppressing the width of the coolant tank 5 in the front-rear direction. However, this example does not exclude a configuration in which Wf≤Wr.

In the present embodiment, the first interval W1 between the right end portion of the front side portion (first portion) of the coolant tank 5 and the right end portion of the rear side portion (second portion) of the coolant tank 5 is wider than the second interval W2 between the left end portion of the front side portion (first portion) of the coolant tank 5 and the left end portion of the rear side portion (second portion) of the coolant tank 5. However, this example does not exclude a configuration in which W1≤W2.

As illustrated in FIG. 12, the coolant tank 5 has outer walls 510 to 519 and inner walls 521 to 527.

The outer wall 510 is a top plate of the coolant tank 5. The outer wall 511 is a bottom plate of the coolant tank 5 and is placed below the outer wall 510. The outer walls 510 and 511 extend in a direction intersecting the up-down direction. The outer walls 512 to 519 are side plates of the coolant tank 5. The upper end portions of the outer walls 512 to 519 are connected to the outer wall 510, and the lower end portions of the outer walls 512 to 519 are connected to the outer wall 511.

Each of the outer walls 512 to 515 has a plate shape and extends in a direction intersecting the front-rear direction. The outer wall 512 is placed on the rear side of the outer walls 513 to 515. The outer wall 513 is placed on the front side of the outer walls 512 and 514 to 515. The outer walls 514 and 515 are placed between the outer wall 512 and the outer wall 513 in the front-rear direction. The outer wall 514 is placed on the left side of the outer wall 515.

Each of the outer walls 516 to 519 has a plate shape and extends in a direction intersecting the left-right direction. The outer wall 516 is placed on the left side of the outer walls 517 to 519. The outer wall 517 is placed on the right side of the outer walls 516 and 518 to 519. The outer walls 518 and 519 are placed between the outer wall 516 and the outer wall 517 in the left-right direction. The outer wall 518 is placed on the left side of the outer wall 519.

The left end portion of the outer wall 512 is connected to the front end portion of the outer wall 518. The right end portion of the outer wall 512 is connected to the front end portion of the outer wall 519.

The left end portion of the outer wall 513 is connected to the rear end portion of the outer wall 516. The right end portion of the outer wall 513 is connected to the rear end portion of the outer wall 517.

The left end portion of the outer wall 514 is connected to the front end portion of the outer wall 516. The right end portion of the outer wall 514 is connected to the rear end portion of the outer wall 518.

The left end portion of the outer wall 515 is connected to the rear end portion of the outer wall 519. The right end portion of the outer wall 515 is connected to the front end portion of the outer wall 517.

The inner walls 521 to 527 are arranged between the outer wall 510 and the outer wall 511 in the up-down direction and partition the internal space of the coolant tank 5. The inner wall 521 has a plate shape and extends in a direction intersecting the left-right direction. The inner wall 521 is provided between the outer walls 514, 516, and 518 on the left side and the outer walls 515, 517, and 519 on the right side in the left-right direction. The inner wall 522 has a plate shape and extends in a direction intersecting the front-rear direction. The inner wall 522 is provided between the outer walls 512, 514, and 515 on the front side and the outer wall 513 on the rear side in the front-rear direction. The inner wall 523 has a plate shape and extends in a direction intersecting the up-down direction. The inner wall 523 is placed on the rear side of the outer walls 512, 514, and 515 on the front side. The inner wall 524 has a plate shape and extends in a direction intersecting the left-right direction. The inner wall 525 has a plate shape and extends in a direction intersecting the up-down direction. The inner wall 526 has a plate shape and extends in a direction intersecting the left-right direction. The inner wall 527 has a plate shape and extends in a direction intersecting the front-rear direction. The inner walls 524 to 527 are placed on the right side of the inner walls 521 and 522 in the left-right direction.

The upper end portion of the inner wall 521 is connected to (the inner surface of) the outer wall 510. The lower end portion of the front side of the inner wall 521 is connected to (the inner surface of) the outer wall 511. The lower end portion of the rear side of the inner wall 521 is connected to (the upper surface of) the inner wall 523. The front end portion of the inner wall 521 is connected to (the inner surface of) the outer wall 512. The rear end portion of the upper side of the inner wall 521 is connected to (the inner surface of) the outer wall 513. The rear end portion of the lower side of the inner wall 521 is connected to (the front surface of) the inner wall 522.

The upper end portion of the inner wall 522 is placed below the outer wall 510. The lower end portion of the inner wall 522 is connected to (the inner surface of) the outer wall 511. The left end portion of the inner wall 522 is connected to (the inner surface of) the outer wall 516. The right end portion of the inner wall 522 is connected to the front end portion of the inner wall 526.

The front end portion of the left side of the inner wall 523 is connected to the upper end portion of the inner wall 522. The front end portion of the right side of the inner wall 523 is connected to the upper end portion of the inner wall 527. The rear end portion of the inner wall 523 is connected to (the inner surface of) the outer wall 513. The left end portion of the inner wall 523 is connected to (the inner surface of) the outer wall 516. The right end portion of the front side of the inner wall 523 is connected to the upper end portion of the inner wall 526. The right end portion of the rear side of the inner wall 523 is connected to the lower end portion of the rear side of the inner wall 524.

The upper end portion of the inner wall 524 is connected to the left end portion of the inner wall 525. The lower end portion of the front side of the inner wall 524 is connected to (the inner surface of) the outer wall 511. The front end portion of the inner wall 523 is connected to (the inner surface of) the outer wall 515. The rear end portion of the upper side of the inner wall 524 is connected to (the inner surface of) the outer wall 513. The rear end portion of the lower side of the inner wall 524 is connected to the right end portion of the inner wall 527.

The front end portion of the inner wall 525 is connected to (the inner surface of) the outer wall 515. The rear end portion of the inner wall 525 is connected to (the inner surface of) the outer wall 513. The right end portion of the inner wall 525 is connected to (the inner surface of) the outer wall 517.

A rear end portion of the inner wall 526 is connected to a left end portion of the inner wall 527. The lower end portions of the inner walls 526 and 527 are connected to (the inner surface of) the outer wall 511.

The coolant tank 5 further has spaces S1 to S3 obtained by partitioning the internal space of the coolant tank 5 by the inner walls 521 to 527.

The space S1 has a role of storing the coolant F (coolant Fa4 described below) and absorbing a volume change of the coolant F (Fa4). The space S1 also functions as a flow path of the coolant F (Fa4) from an opening 531 to an opening 534 described below.

The space S2 has a role of storing the coolant F (coolant Fb2 described below) and absorbing a volume change of the coolant F (Fb2). The space S2 also functions as a flow path of the coolant F (Fb2) from the opening 534 to the opening 533 described below.

The space S3 has a role of absorbing a volume change of the coolant F (coolant Fb4 described below), and also functions as a flow path of the coolant F (Fb4) from an opening 536 to an opening 537 described below.

The coolant tank 5 further has openings 531 to 537. The opening 531 is provided on the outer wall 514 and connects the space S1 and the inside of the first switching portion 71. The opening 532 is provided on the outer wall 511 and connects the space S1 and the inlet of the flow passage 611 of the first heat exchanger 61 via the flow passage 80. The opening 533 is provided on the outer wall 511 and connects an inlet of a flow passage 621 of the second heat exchanger 62 and the space S2 via a coolant pipe 81 described below. The opening 534 is provided on the outer wall 519 and connects the space S2 and the inside of the second switching portion 72. The opening 535 is provided on the outer wall 515 and connects the inside of the second switching portion 72 and the space S3. The opening 536 is provided on the left side of the outer wall 511 and connects the space S3 and the outlet of the flow passage 621 of the second heat exchanger 62 via the coolant pipe 82 described below. The opening 537 is provided on the right side of the outer wall 511 and connects the space S3 and the second coolant pump 92 via the flow passage 83 and the liquid inlet pipe 921.

### <1-3-2. Heat Exchanger 6>

The heat exchanger 6 exchanges heat between the coolant F flowing through the flow passages 611 and 621 and a refrigerant having a temperature lower than that of the coolant F to cool the coolant F. The heat exchanger 6 includes a first heat exchanger 61 and a second heat exchanger 62. The coolant F flowing in from the space S1 of the coolant tank 5 passes through the first heat exchanger 61 and is cooled. The coolant F flowing in from the space S2 of the coolant tank 5 passes through the second heat exchanger 62 and is cooled. The refrigerant is, for example, water. In the present embodiment, the refrigerant is seawater, and is taken in from the periphery of a vehicle 800 such as a ship on which the engine 100 is mounted and supplied to the inside of the heat exchanger 6 (for example, each of the first heat exchanger 61 and the second heat exchanger 62). The water as the refrigerant is not limited to this example, and may be fresh water or brackish water.

The heat exchanger 6 (the first heat exchanger 61 and the second heat exchanger 62) dissipates the heat of the coolant F to water M supplied from a water pump 93 described below. Thus, the engine 100 can cool the coolant F by water taken in from the outside of the vehicle 800 without requiring a refrigerant for the heat exchanger 6, a pipe and a pump for circulating the refrigerant, and a radiator for cooling the refrigerant. The water after the heat exchange is discharged to the outside (for example, into the water). The example of the present embodiment does not exclude a configuration in which a refrigerant other than water pumped up from the water is used, and does not exclude a configuration in which the engine 100 includes a pipe and a pump for circulating the refrigerant, a radiator for cooling the refrigerant, and the like. In the latter case, the water pump 93 can be omitted.

### <1-3-3. Electrical Equipment Portion 60>

The electrical equipment portion 60 includes, for example, an electronic component (not shown) such as an electronic control unit (ECU) of the engine 100 and a housing (not shown) that accommodates the electronic component. The housing may accommodate a member other than the above-described electronic components, and may accommodate, for example, a member that is easily affected by a temperature rise, a member that undergoes frequent maintenance, and the like.

The electrical equipment portion 60 is preferably provided at a rear end portion of the heat exchanger 6. Thus, in the engine 100, an empty space below the coolant tank 5 and behind the heat exchanger 6 can be effectively utilized. That is, the electrical equipment portion 60 can be compactly arranged in the space. Furthermore, heat is dissipated from the electrical equipment portion 60 to the heat exchanger 6, and thus a temperature rise of the electrical equipment portion 60 can be effectively suppressed. Since the electrical equipment portion 60 is easily exposed to the outside of the engine 100, the workability of maintenance or the like of the electrical equipment portion 60 can be improved. However, this example does not exclude a configuration in which the electrical equipment portion 60 is not arranged at the rear end portion of the heat exchanger 6.

### <1-3-4. First Switching Portion 71>

The first switching portion 71 is attached between the opening 531 of the coolant tank 5 and the liquid feed pipe 24, and sends a coolant Fa1 to either the first coolant pump 91 or the space S1 in accordance with the temperature of the coolant Fa1 flowing in from the liquid feed pipe 24.

For example, the first switching portion 71 includes a housing 710, a first temperature sensor 711, openings 712 and 713, and a first temperature adjustment valve 714. The first temperature sensor 711 is provided inside the housing 710 and detects the temperature of the coolant Fa1. The openings 712 and 713 are provided on the housing 710. The opening 712 is an inflow port of the coolant Fa1 and is connected to the rear end of the liquid feed pipe 24. The opening 713 is an outflow port of the coolant Fa2 toward the first coolant pump 91. The first temperature adjustment valve 714 covers the openings 531, 712, and 713 and switches the flow and the cutoff of the coolant Fa1 with respect to the openings 531 and 713 from one of the flow and the cutoff to the other under the control of the ECU or the like based on the detection result of the first temperature sensor 711.

For example, when the detection value of the first temperature sensor 711 (the temperature of the coolant Fa1) is equal to or more than a first predetermined value, the first temperature adjustment valve 714 opens the opening 713 and closes the opening 531. Thus, the coolant Fa1 flows through the opening 713 into the first coolant pump 91. When the detection value of the first temperature sensor 711 is less than the first predetermined value, the first temperature adjustment valve 714 closes the opening 713 and opens the opening 531 to allow the coolant Fa1 to flow through the opening 531 into the space S1.

The first temperature adjustment valve 714 is provided in the housing 710 of the first switching portion 71 in FIGS. 1 to 4. However, this example does not exclude a configuration in which the first temperature adjustment valve 714 is not provided in the housing 710. For example, the first temperature adjustment valve 714 may be provided outside the housing 710. In FIGS. 1 to 4, the first temperature sensor 711 is provided in the housing 710 of the first switching portion 71 and is provided, for example, in the first temperature adjustment valve 714. However, the present invention is not limited to this example, and the first temperature sensor 711 may be provided outside the first temperature adjustment valve 714, and may be provided, for example, in the pipe 715 that connects the first temperature adjustment valve 714 and the coolant tank 5 (see FIGS. 5 and 6).

### <1-3-5. Second Switching Portion 72>

The second switching portion 72 is attached between the openings 534, 535 of the coolant tank 5 and the liquid discharge pipe 54, and sends the coolant Fb1 to either the space S2 or the space S3 in accordance with the temperature of the coolant Fb1 flowing in from the liquid discharge pipe 54.

For example, the second switching portion 72 has a housing 720, a second temperature sensor 721, an opening 722, and a second temperature adjustment valve 723. The second temperature sensor 721 is provided inside the housing 720 and detects the temperature of the coolant Fb1. The opening 722 is an inflow port of the coolant Fb1, is provided in the housing 720, and is connected to the liquid discharge pipe 54. The second temperature adjustment valve 723 covers the openings 534, 535, and 722 and switches the flow and the cutoff of the coolant Fb1 with respect to each of the openings 534 and 535 from one of the flow and the cutoff to the other under the control of the ECU or the like based on the detection result of the second temperature sensor 721.

For example, when the detection value of the second temperature sensor 721 (the temperature of the coolant Fb1) is equal to or more than a second predetermined value, the second temperature adjustment valve 723 opens the opening 534 and closes the opening 535. Thus, the coolant Fb1 flows through the opening 534 into the space S2. The second predetermined value is not particularly limited, but is higher than the first predetermined value in the first temperature sensor 711.

When the detection value of the second temperature sensor 721 is less than a second predetermined value, the second temperature adjustment valve 723 closes the opening 534 and opens the opening 535. Thus, the coolant Fb1 flows through the opening 535 into the space S3 and merges with the coolant Fb4 flowing in the space S3.

The second temperature adjustment valve 723 is provided in the housing 720 of the second switching portion 72 in FIGS. 1 to 4. However, this example does not exclude a configuration in which the second temperature adjustment valve 723 is not provided in the housing 720. For example, the second temperature adjustment valve 723 may be provided outside the housing 720. In FIGS. 1 to 4, the second temperature sensor 721 is provided in the housing 720 of the second switching portion 72 and is provided, for example, in the second temperature adjustment valve 723. However, the present invention is not limited to this example, and the second temperature sensor 721 may be placed outside the second temperature adjustment valve 723, and may be placed, for example, in the pipe 724 that connects the second temperature adjustment valve 723 and the coolant tank 5 (see FIG. 6).

### <1-3-6. First Coolant Pump 91>

The first coolant pump 91 supplies the coolant F to the intercooler 2. For example, the first coolant pump 91 sends the coolant F flowing into the liquid inlet pipe 911 (for example, at least one of the coolants Fa2 and Fa5) as the coolant Fa3 from the liquid feed pipe 912 to the liquid supply pipe 23. The coolant Fa3 is supplied to the intercooler 2 through the liquid supply pipe 23 and flows into the first switching portion 71 as the coolant Fa1 through the liquid feed pipe 24.

The liquid supply pipe 23 and the liquid feed pipe 24 are pipes for the coolant F, and are placed on the left side of the engine body 200 and extend in the front-rear direction. The rear end of the liquid supply pipe 23 is connected to the liquid inlet pipe 911 of the first coolant pump 91. The front ends of the liquid supply pipe 23 and the liquid feed pipe 24 are connected to the intercooler 2. The rear end of the liquid feed pipe 24 is connected to the opening 712 of the first switching portion 71.

### <1-3-7. Second Coolant Pump 92>

The second coolant pump 92 supplies the coolant F to each portion of the engine 100 that needs to be cooled (however, other than the intercooler 2). For example, the second coolant pump 92 sends the coolant F flowing into the liquid inlet pipe 921 (for example, the coolant Fb1 flowing into the space S3 or the coolant Fb4 flowing in the space S3) as the coolant Fb5 from the liquid feed pipe 922 to the each portion described above (particularly, the combustion chambers) of the engine 100. The coolant F cools each portion described above, then is collected in the liquid discharge pipe 54, and flows into the second switching portion 72 as the coolant Fb1 through the liquid discharge pipe 54.

### <1-3-8. Water Pump 93>

The water pump 93 supplies water as a refrigerant for heat exchange to the heat exchanger 6 (for example, the first heat exchanger 61 and the second heat exchanger 62). For example, the tip end portion of the water intake pipe 931 of the water pump 93 is placed in water outside the vehicle 800 equipped with the engine 100. The water supply pipe 932 of the water pump 93 is connected to the heat exchanger 6. The water pump 93 takes water from the water through the water intake pipe 931 and sends the water to the heat exchanger 6 through the water supply pipe 932. The water supplied to the heat exchanger 6 cools the coolant F (Fa5 and Fb3) in the flow passages 611, 621 by heat exchange, and cools the electrical equipment portion 60.

### <1-3-9. Example of Circulation of Coolant F>

Next, an example of circulation of the coolant F will be described with reference to FIGS. 1 to 4 and 12. The cooling system of the engine 100 includes a first cooling system and a second cooling system. In the first cooling system, the low-temperature coolant F circulates and is cooled in the first heat exchanger 61. In the second cooling system, the coolant F having a higher temperature than the coolant F in the first cooling system circulates and is cooled in the second heat exchanger 62. The circulation route of the first cooling system is independent of the circulation route of the second cooling system. In this specification, the coolant F circulating in the first cooling system may be referred to as "Fa" (or "Fa1" to "Fa5"). The coolant F circulating in the second cooling system may be referred to as "Fb" (or "Fb1" to "Fb5").

### <1-3-9-1. Configuration Example of First Cooling System>

First, a configuration example of the first cooling system on the low temperature side will be described. The coolant Fa is supplied from the first coolant pump 91 to the intercooler 2 via the liquid supply pipe 23. The coolant Fa cools the intake air pressurized and compressed by the intercooler 2, and then flows into the first switching portion 71 as the coolant Fa1 via the liquid feed pipe 24 and the opening 712.

When the temperature of the coolant Fa1 detected by the first temperature sensor 711 is equal to or less than the first predetermined value, the temperature of the coolant Fa1 can be determined to be sufficiently low. Therefore, the first temperature adjustment valve 714 of the first switching portion 71 cuts off the flow of the coolant Fa1 to the opening 531 and causes the coolant Fa1 to flow into the opening 713. The coolant Fa2 that has passed through the opening 713 flows into the liquid inlet pipe 911 of the first coolant pump 91. Then, the first coolant pump 91 sends the coolant Fa3 from the liquid feed pipe 912 to the liquid supply pipe 23 and supplies the coolant Fa3 to the intercooler 2.

On the other hand, when the temperature of the coolant Fa1 detected by the first temperature sensor 711 is higher than the first predetermined value, it can be determined that the temperature of the coolant Fa1 is not low. Therefore, the first temperature adjustment valve 714 of the first switching portion 71 cuts off the flow of the coolant Fa1 to the opening 713 and causes the coolant Fa1 to flow into the space S1 via the opening 531. The coolant Fa4 in the space S1 flows out from the opening 532 to the flow passage 80. The coolant Fa5 flowing through the flow passage 80 flows into the flow passage 611 of the first heat exchanger 61 and is cooled by heat exchange with the refrigerant. Then, the coolant Fa5 flows into the liquid inlet pipe 911 of the first coolant pump 91 from the flow passage 611, is sent as the coolant Fa3 from the first coolant pump 91 through the liquid feed pipe 912 to the liquid supply pipe 23, and is supplied to the intercooler 2.

### <1-3-9-2. Configuration Example of Second Cooling System>

Next, a configuration example of the second cooling system on the high temperature side will be described. The coolant Fb is supplied from the second coolant pump 92 to each portion (particularly, the combustion chamber) of the engine 100 via the liquid supply pipe 23. The coolant Fb cools each portion described above and then flows into the second switching portion 72 as the coolant Fb1 via the liquid discharge pipe 54 and the opening 722.

When the temperature of the coolant Fb1 detected by the second temperature sensor 721 is equal to or less than the second predetermined value, the temperature of the coolant Fb1 can be determined to be low. Therefore, the second temperature adjustment valve 723 of the second switching portion 72 cuts off the flow of the coolant Fb1 to the opening 534 and causes the coolant Fb1 to flow into the space S3 via the opening 535. Thus, the coolant Fb1 that has passed through the opening 535 merges with the flow of the coolant Fb4 described below in the space S3.

On the other hand, when the temperature of the coolant Fb1 detected by the second temperature sensor 721 is higher than the predetermined value, it can be determined that the temperature of the coolant Fb1 is not low. Therefore, the second temperature adjustment valve 723 of the second switching portion 72 cuts off the flow of the coolant Fb1 to the opening 535 and causes the coolant Fb1 to flow into the space S2 via the opening 534. The coolant Fb2 in the space S2 flows out as the coolant Fb3 to the coolant pipe 81 via the opening 533. The coolant Fb3 flows into the flow passage 621 of the second heat exchanger 62 from the coolant pipe 81 and is cooled by heat exchange with the refrigerant. Then, the coolant Fb3 flows into the space S3 from the flow passage 621 via the coolant pipe 82 and the opening 536.

Then, the coolant Fb4 in the space S3 (the coolant Fb1 flowing into the space S3 via the opening 535) flows into the liquid inlet pipe 921 of the second coolant pump 92 from the opening 537 via the flow passage 83. The second coolant pump 92 sends the coolant Fb5 from the liquid feed pipe 922 and supplies the coolant Fb5 to each portion of the engine 100 other than the intercooler 2 (particularly, the combustion chambers including the cylinder 204). The coolant F discharged from each portion described above is collected in the liquid discharge pipe 54 and flows into the second switching portion 72 as the coolant Fb1.

### <2. Considerations Etc>

Various technical features disclosed in the present specification can be changed in various ways without departing from the spirit of the technical creation thereof. That is, the above embodiments should be considered exemplary in all respects and not restrictive. In addition, the plurality of embodiments and modifications described in this specification may be embodied in combinations within a range to the extent possible.

In the embodiment described above, the present invention is applied to the V-type engine. However, this is merely an example. The present invention can be widely applied to an engine including two cylinder rows, and can also be applied to, for example, a horizontally opposed engine in which a piston reciprocates in the horizontal direction.

### <3. Overview>

The above-described embodiment will be collectively described below.

For example, the engine 100 disclosed herein is an engine 100 having a configuration (first configuration) including:
a turbocharger 1 that pressurizes and compresses intake air, and
a cooling portion 2 that cools the intake air of the turbocharger 1,
in which on an upper side (+Z side) of the engine 100, at least a portion of the cooling portion 2 is placed on one side (+X side) of the turbocharger 1 in an output shaft direction (engine output shaft direction).

The engine 100 having the first configuration may have a configuration (second configuration) in which
on an upper side (+Z side) of the engine 100, at least a portion of the turbocharger 1 that is located outer side than a center line J2 of a rotation shaft 141 of the bearing portion 14 in a left-right direction perpendicular to the output shaft direction (engine output shaft direction) and an up-down direction is placed outer side than the cooling portion 2 in the left-right direction.

The engine 100 having the first or second configuration may have a configuration (third configuration) in which the engine 100 further includes
a pair of cylinder rows 205 composed of a plurality of cylinders 204 arranged in the output shaft direction (engine output shaft direction), in which
   each of the cylinder rows 205 is placed on an outer side than an output shaft 101 of the engine 100 in a left-right direction perpendicular to the output shaft direction (engine output shaft direction) and an up-down direction, and
the turbocharger 1 includes an air feeding portion 11 that feeds the intake air toward an inner side in a left-right direction.

Further, the engine 100 having any one of the first to third configurations may have a configuration (fourth configuration) in which the engine 100 further includes
a support portion 3 that supports the turbocharger 1 and the cooling portion 2, in which
the support portion 3 includes
   a first support member 31 that supports the cooling portion 2,
   a second support member 32 that is provided independently of the first support member 31 and supports the turbocharger 1.

Further, the engine 100 having the fourth configuration may have a configuration (fifth configuration) in which the engine 100 further includes:
a flywheel housing 400 that houses a flywheel 401 that is attached to one (+X side) end portion of an output shaft 101 of the engine 100 in the output shaft direction (engine output shaft direction) in which
the support portion 3 is attached to the flywheel housing 400, and
the cooling portion 2 is provided at an interval from the flywheel housing 400 in at least one of the one side (+X) in the output shaft direction (engine output shaft direction) and one side (+Z) in the up-down direction.

The engine 100 having any one of the first to fifth configurations may have a configuration (sixth configuration) in which the engine 100 further includes
a cover member 700 that covers at least a portion of the turbocharger 1, in which
the turbocharger 1 includes a turbine portion 12 through which exhaust gas of the engine 100 passes and the cover member 700 covers the turbine portion 12.

### REFERENCE SIGNS LIST

100: engine
101: crankshaft
200: engine body
201: cylinder block
202: head block
203: head cover
204: cylinder
205: cylinder row
300: oil pan
400: flywheel housing
401: flywheel
500: air supply manifold
500L: left air supply manifold
500R: right air supply manifold
600: exhaust manifold
600L: left exhaust manifold
600R: right exhaust manifold
700: cover member
800: vehicle
1: turbocharger
1L: left turbocharger
1R: right turbocharger
11: compressor (air feeding portion)
111: rotor
112: vane
12: turbine portion
121: turbine
13: exhaust pipe
14: bearing portion
141: shaft
15: filter portion
2: intercooler (cooling portion)
21: air supply pipe
22: air feed pipe
23: liquid supply pipe
24: liquid feed pipe
3: support portion
31: first support member
32: second support member
5: coolant tank (storage portion)
510~519: outer wall
521~527: inner wall
531~537: opening
54: liquid discharge pipe
55: holding portion
551: first holding portion
552: second holding portion
553: third holding portion
6: heat exchanger
60: electrical equipment portion
61, 62: flow passage
63: port
64: lid portion
65: seal member
71: first switching portion
710: housing
711: first temperature sensor
712, 713: opening
714: first temperature adjustment valve
715: pipe
72: second switching portion
720: housing
721: second temperature sensor
722: opening
723: second temperature adjustment valve
724: pipe
80: flow passage
81, 82: coolant pipe
83: flow passage
91: first coolant pump
911: liquid inlet pipe
912: liquid feed pipe
92: second coolant pump
921: liquid inlet pipe
922: liquid feed pipe
93: water intake pump
931: water intake pipe
932: water supply pipe
F, Fa, Fa1 to Fa5, Fb, Fb1~Fb5: coolant
M: water
J1, J2: center line
S1, S2, S3: space
LB: left bank
RB: right bank

## Claims

1. An engine comprising:
a turbocharger that pressurizes and compresses intake air, and
a cooling portion that cools the intake air of the turbocharger,
wherein on an upper side of the engine, at least a portion of the cooling portion is placed on one side of the turbocharger in an output shaft direction.

2. The engine according to claim 1, wherein, on an upper side of the engine, at least a portion of the turbocharger that is located outer side than a center line of a rotation shaft of a bearing portion in a left-right direction perpendicular to the output shaft direction and an up-down direction is placed outer side than the cooling portion in the left-right direction.

3. The engine according to claim 1 or 2, further comprising:
a pair of cylinder rows composed of a plurality of cylinders arranged in the output shaft direction, wherein
each of the cylinder rows is placed on an outer side than an output shaft of the engine in a left-right direction perpendicular to the output shaft direction and an up-down direction, and
the turbocharger includes an air feeding portion that feeds the intake air toward an inner side in the left-right direction.

4. The engine according to claim 1 or 2, further comprising:
a support portion that supports the cooling portion, wherein
the support portion includes:
a first support member that supports the cooling portion, and
a second support member that is provided independently of the first support member and supports the turbocharger and the cooling portion.

5. The engine according to claim 4, further comprising:
a flywheel housing that houses a flywheel that is attached to one end portion of an output shaft of the engine in the output shaft direction, wherein
the support portion is attached to the flywheel housing, and
the cooling portion is provided at an interval from the flywheel housing in at least one of one side in the output shaft direction and one side in the up-down direction.

6. The engine according to claim 1 or 2, further comprising:
a cover member that covers at least a portion of the turbocharger, wherein
the turbocharger includes a turbine portion through which exhaust gas of the engine passes and the cover member covers the turbine portion.
